# FASCICULE DE BREVET EUROPEEN

(11) **EP 3 277 522 B1**
(45) Date de publication et mention de la délivrance du brevet: **08.05.2019**
(21) Numéro de dépôt: 16714498.9
(22) Date de dépôt: 24.03.2016
(51) Int. Cl.: B60C 11/03, B60C 11/12, B60C 11/13, B60C 11/11

(54) **BANDE DE ROULEMENT POUR PNEUMATIQUE COMPORTANT DES CANAUX**
LAUFFLÄCHENSTREIFEN FÜR EINEN REIFEN MIT KANÄLEN
TREAD FOR A TYRE COMPRISING CHANNELS

(30) Priorité: 31.03.2015 FR 1552752
(43) Date de publication de la demande: 07.02.2018
(73) Titulaire: Compagnie Générale des Etablissements Michelin, 63000 Clermont-Ferrand (FR)
(72) Inventeur: VANTAL, Marie-Hélène, 63040 Clermont-Ferrand Cedex 9 (FR); LEDIEU, Vincent, 63040 Clermont-Ferrand Cedex 9 (FR); YOKOKAWA, Kazutaka, 63040 Clermont-Ferrand Cedex 9 (FR); BONNETON, Quentin, 63040 Clermont-Ferrand Cedex 9 (FR); DEBORDEAUX, Héloïse, 63040 Clermont-Ferrand Cedex 9 (FR); VANDAELE, Mathieu, 63040 Clermont-Ferrand Cedex 9 (FR)
(74) Mandataire: Demaure, Pierre-Yves
(86) Numéro de dépôt international: PCT/FR2016/050656
(87) Numéro de publication internationale: WO 2016/156704

(56) Documents cités:
- EP-A1- 2 127 908
- EP-A1- 2 308 697
- EP-A2- 2 332 745
- JP-A- S62 241 710

## Description

### DOMAINE DE L'INVENTION

La présente invention concerne un pneumatique comprenant une bande de roulement. Plus particulièrement, l'invention concerne une bande de roulement comportant une pluralité de canaux qui sont non visibles, lorsque la bande de roulement est dans un état neuf.

### ETAT DE LA TECHNIQUE

Le document EP2332745 divulgue un pneumatique directionnel comprenant une pluralité de rainures circonférentielles ou obliques délimitant des blocs de gomme allongés. Tout ou partie de ces blocs de gomme allongés comprennent dans leur profondeur des canaux. Ces canaux apparaissent à partir d'un certain taux d'usure de la bande de roulement et sont destinés à augmenter la densité de rainure de cette bande de roulement à partir de ce taux d'usure particulier. En effet, à l'état neuf les rainures visibles assurent l'évacuation de l'eau, notamment, lors de roulages sur une chaussée humide. Le volume d'eau que la bande de roulement est capable d'évacuer est directement lié à la profondeur de ces rainures visibles. Avec l'usure, la profondeur des rainures visibles diminue, et donc la capacité d'évacuation de la bande de roulement diminue également. En redonnant du creux à la bande de roulement via les canaux cachés, on maintient ainsi une certaine capacité du pneumatique à évacuer l'eau même dans un état d'usure avancé.

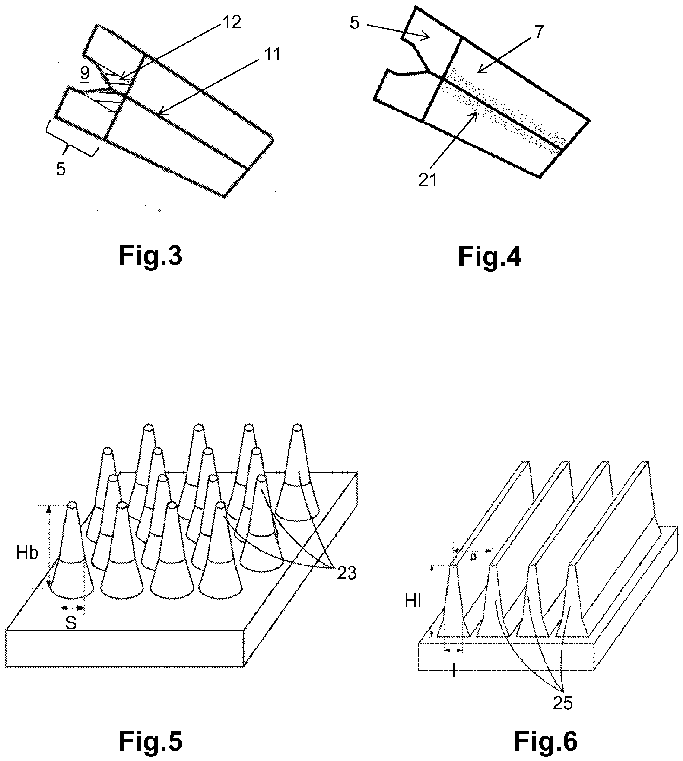

La figure 6 du document EP2332745 présente une vue en coupe d'un bloc allongé. Dans cette vue en coupe, le bloc allongé comprend un canal et une incision prolongeant ce canal jusqu'à une face de contact du bloc allongé. Plus particulièrement, le canal comporte une partie de transition dans laquelle la largeur du canal diminue. La figure 4 du document EP2332745 présente la trace du canal et de l'incision sur une paroi latérale d'un bloc allongé. En virage, et particulièrement en limite d'adhérence, le pneumatique est fortement sollicité selon une direction transversale. Ce sont les parois latérales des blocs allongés qui reprennent tout ou partie de ces sollicitations, ces parois latérales s'étendant principalement selon la direction circonférentielle. Or, il existe une certaine fragilité du bloc allongé autour de la partie de transition du canal, ainsi qu'autour de l'incision. Le canal et l'incision débouchant sur la paroi latérale du bloc allongé, il existe alors un risque d'arrachement de la gomme dans le bloc allongé autour du canal et de l'incision. Ce risque est d'autant plus accru, que la figure 4 divulgue des cannelures sur la face de contact du bloc allongé, ces cannelures offrant des zones de sollicitations accrues pour des cailloux en mouvement relatif par rapport à la bande de roulement.

Les documents JP S62 241 710 A, EP 2 308 697 A1 et EP 2 332 745 A2 décrivent des canaux et des incisions, les canaux débouchant sur des parois inclinées de blocs.

Il existe donc un besoin de proposer un pneumatique comportant des bonnes caractéristiques d'adhérence sur chaussée humide tant à l'état neuf que dans un état partiellement usé, tout en présentant une bonne résistance mécanique aux contraintes s'exerçant sur sa bande de roulement.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

Par « bloc », on entend un élément en relief formé sur la bande de roulement délimité par des creux ou rainures et comprenant des parois latérales et une face de contact.

Par « rainure », on entend une découpure (« cut-out » en anglais) dont les faces de matière ne se touchent pas dans les conditions usuelles de roulage. Généralement, la largeur d'une rainure est supérieure ou égale à 2 mm.

Par « incision », on entend une découpure délimitant deux parois latérales de deux blocs adjacents, lesdites parois latérales se touchant dans les conditions usuelles de roulage. Généralement, la largeur d'une incision est inférieure à 2 mm.

Par « zone de sortie de paroi latérale de l'incision », on entend une zone centrée sur une trace formée par l'incision sur cette paroi latérale. La largeur de cette zone est d'au moins le double de la largeur de l'incision.

Par « zone de sortie de face de contact de l'incision », on entend une zone centrée sur une trace formée par l'incision sur cette face de contact. La largeur de cette zone est d'au moins le double de la largeur de l'incision.

Par direction radiale, on entend une direction qui est perpendiculaire à l'axe de rotation du pneumatique (cette direction correspond à la direction de l'épaisseur de la bande de roulement).

Par direction transversale ou axiale, on entend une direction parallèle à l'axe de rotation du pneumatique.

Par direction circonférentielle, on entend une direction qui est tangente à tout cercle centré sur l'axe de rotation du pneumatique. Cette direction est perpendiculaire à la fois à la direction axiale et à une direction radiale.

### RESUME DE L'INVENTION

L'invention concerne un pneumatique comportant une bande de roulement. Cette bande de roulement comprend au moins un bloc allongé. Le bloc allongé est délimité par au moins une paroi latérale et une face de contact. La paroi latérale fait un angle non nul avec une direction transversale et la face de contact est destinée à venir en contact avec une chaussée. Le pneumatique comprend au moins un canal s'étendant dans le bloc allongé et débouchant sur la paroi latérale de ce bloc allongé. Le pneumatique comprend également une incision s'étendant à partir du canal vers la face de contact, cette incision débouchant sur la paroi latérale du bloc allongé au niveau d'une zone de sortie de paroi latérale. La paroi latérale du bloc allongé est inclinée par rapport à une direction radiale, au moins dans la zone de sortie de paroi latérale de l'incision, d'un angle θ compris entre 20 degrés et 60 degrés par rapport à cette direction radiale.

Au cours d'un roulage, la bande de roulement du pneumatique est sollicitée mécaniquement par des cailloux présents sur la chaussée. Chaque caillou entraîne une déformation locale de la bande de roulement dans la zone de contact entre le caillou et cette bande de roulement. Cette déformation locale peut engendrer des fissures dans la gomme qui en se propageant aboutissent à un arrachement de parties de gomme de la bande de roulement. Ce phénomène est accentué par la présence d'incisions et de canaux débouchant dans des parois latérales de blocs allongés. En effet, les parois latérales lorsqu'elles font un angle non nul avec une direction transversale subissent les contraintes mécaniques de ces cailloux, notamment en virage en limite d'adhérence. En prévoyant une inclinaison spécifique, supérieure à 20 degrés dans la zone de sortie de la paroi latérale, les cailloux « glissent » plus facilement sur la paroi latérale, réduisant le risque de génération de fissures dans le bloc de gomme. L'aire de la face de contact est directement liée à l'angle d'inclinaison de la paroi latérale. Plus l'angle d'inclinaison est important, plus l'aire de la face de contact du bloc diminue. En limitant l'angle d'inclinaison à 60°, on maintient ainsi une aire de la face de contact suffisante pour assurer une bonne adhérence du pneumatique sur la chaussée, notamment lors de freinages et/ou d'accélérations en ligne droite.

Le bloc allongé fait partie d'un ensemble de blocs. L'ensemble de blocs s'étend d'un bord de la bande de roulement vers le centre de cette bande de roulement, globalement selon une courbure C. L'ensemble de blocs est répété sur toute la circonférence du pneumatique de sorte que la bande de roulement est directionelle. Le bloc allongé est séparé d'un autre bloc de l'ensemble de blocs par une rainure, cette rainure délimitant la paroi latérale inclinée du bloc allongé dans laquelle l'incision et le canal débouchent.

Dans cette configuration, la paroi latérale du bloc est protégée au moins partiellement par un autre bloc de l'ensemble de blocs. En cas de sollicitations latérales importantes, de type glissement, ces sollicitation sont reprises par tous les blocs de l'ensemble de blocs. La rainure délimitant la paroi latérale inclinée est une rainure secondaire par rapport à une rainure principale délimitant l'ensemble de blocs. En prévoyant que le canal débouche dans cette rainure secondaire au lieu de la rainure principale, on évite que l'eau évacuée par le canal ne vienne trop perturber l'évacuation de l'eau dans la rainure principale. On favorise alors l'adhérence du pneumatique sur une chaussée humide, notamment lorsque la bande de roulement est dans un état d'usure avancé.

Dans une variante de réalisation, l'incision débouche sur la face de contact au niveau d'une zone de sortie de face de contact de l'incision. La zone de sortie de face de contact de l'incision comprend une texture faisant contraste avec le reste de la face de contact, cette texture est venue de matière avec le bloc allongé.

De cette manière, on identifie plus facilement la présence de canaux cachés dans la bande de roulement, lorsque celle-ci est dans un état neuf. En effet, la présence d'un tel canal peut être un argument supplémentaire pour la vente du pneumatique. Par « texture faisant contraste avec le reste de la face de contact », on entend que la différence de luminosité entre la texture sur la face de contact et le reste de la face de contact est d'au moins 5 unités. Par « luminosité », également appelé luminance, on entend le paramètre qui caractérise une surface à réfléchir plus ou moins la lumière. La luminosité est exprimée selon une échelle allant de 0 à 100 selon le modèle colorimétrique L*a*b* établit par la CIE (Commission Internationale de l'Eclairage) en 1976. La valeur 100 représente le blanc ou la réflexion totale ; la valeur 0, le noir ou l'absorption totale. On considère ici que la luminosité de la texture est comprise entre 5 et 18, préférentiellement entre 8 et 16 et que la luminosité du reste de la face de contact est comprise entre 20 et 35.

De manière préférentielle, la texture comprend une pluralité de brins répartis dans la texture selon une densité au moins égale à un brin par millimètre carré (mm²), chaque brin ayant une section moyenne comprise entre 0,003 mm² et 1 mm².

On obtient ainsi d'une manière simple et pratique une texture faisant contraste avec le reste de la face de contact.

Dans une variante de réalisation, la texture comprend une pluralité de lamelles ayant un pas inférieure à 0,3 mm et une largeur moyenne comprise entre 0,03 mm et 0,25 mm.

On obtient également d'une manière simple et pratique, une texture faisant contraste avec le reste de la face de contact.

Dans un mode de réalisation préférentiel, l'incision forme une trace sur la face de contact du bloc allongé, les lamelles de la texture s'étendent globalement parallèlement à cette trace.

De cette manière, on évite de créer des zones sur la surface de contact facilitant le blocage de cailloux vis-à-vis du bloc, dans le mouvement relatif de ces cailloux par rapport à la bande de roulement.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente une vue partielle d'une bande de roulement d'un pneumatique selon l'invention ;
- la **figure 2** représente schématiquement une vue en coupe d'un bloc allongé de la bande de roulement de la **figure 1** ;
- la **figure 3** est vue agrandie d'un bloc allongé de la bande de roulement de la **figure 1** **;**
- la **figure 4** représente une vue agrandie d'un bloc allongé de la bande de roulement de la **figure 1****,** comprenant une texture ;
- la **figure 5** décrit une texture présente sur le bloc allongé de la **figure 3****,** selon un premier mode de réalisation ;
- la **figure 6** décrit une texture présente sur le bloc allongé de la **figure 3****,** selon un second mode de réalisation.

Dans la description qui va suivre, des éléments sensiblement identiques ou similaires seront désignés par des références identiques.

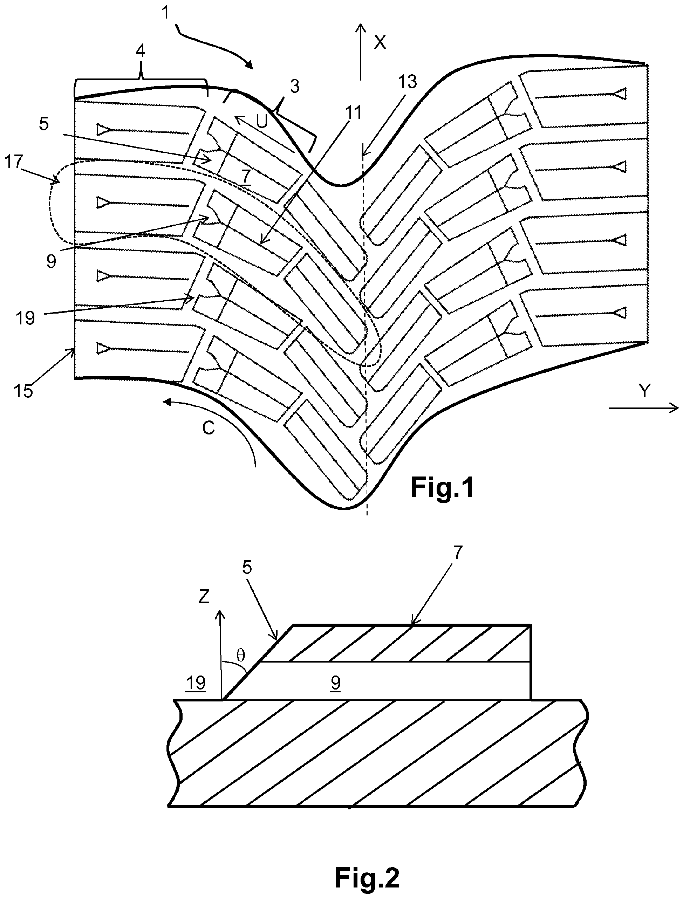

La **figure 1** représente une vue partielle d'une bande de roulement d'un pneumatique. Cette bande de roulement comprend au moins un bloc allongé 3 s'étendant selon une direction principale U. Cette direction principale U fait un angle non nul avec une direction transversale Y. Dans un mode de réalisation préférentiel, la direction principale du bloc allongé est comprise entre 45 degrés et 80 degrés par rapport à la direction transversale Y. Le bloc allongé 3 comprend une incision 11 débouchant sur une face de contact 7 du bloc allongé en formant une trace qui est ici rectiligne. Le bloc allongé 3 comprend également un canal 9 disposé dans la profondeur du bloc, l'incision 11 reliant le canal 9 à la face de contact 7 du bloc. Le canal 9 et l'incision 11 débouchent sur une paroi latérale 5 du bloc allongé 3.

Comme cela est visible à la **figure 2****,** la paroi latérale 5 du bloc allongé 3 est inclinée par rapport à une direction radiale Z d'un angle θ compris entre 20 degrés et 60 degrés par rapport à cette direction radiale Z. Dit autrement, avec l'angle θ, la rainure 19 bordant la paroi latérale 5 présente un élargissement en allant du fond de la rainure 19 vers la surface de la bande de roulement. L'inclinaison de la paroi latérale 5 facilite l'évacuation de cailloux agissant sur cette paroi latérale, notamment lors d'un déplacement transversale de ces cailloux par rapport au bloc allongé 3. On limite ainsi les sollicitations générées par les cailloux sur cette paroi latérale 5, notamment dans la partie de gomme présente au-dessus de la sortie du canal 9 sur la paroi latérale 5 à proximité de l'incision 11 (partie hachurée 12 sur la **figure 3**).

On notera qu'aux **figures 1** à **3****,** c'est l'ensemble de la paroi latérale 5 du bloc allongé 3 qui est représenté comme étant inclinée. En variante, seule une zone de la paroi latérale 5 est inclinée, cette zone est centrée sur l'incision 11, la largeur de cette zone étant d'au moins le double de la largeur de l'incision 11.

On notera également que le canal 9 et l'incision 11 débouchent sur une paroi latérale qui s'étend globalement de manière perpendiculaire à la direction d'extension principale U du bloc allongé 3. En variante, le canal et l'incision peuvent déboucher sur une paroi latérale parallèle à cette direction d'extension principale U.

On notera enfin que sur la **figure 1****,** le bloc allongé 3 fait partie d'un ensemble de blocs 17 comprenant ici trois blocs. L'ensemble de blocs 17 s'étend d'un bord 15 de la bande de roulement vers un centre 13 de cette bande de roulement, globalement selon une courbure C. Les blocs de l'ensemble de blocs 17 s'élargissent du centre 13 vers le bord 15. L'ensemble de blocs est ici répété de chaque côté du centre 13 de la bande de roulement et sur toute la circonférence du pneumatique de sorte que la bande de roulement est directionnelle. Par « bande de roulement directionnelle », on entend une bande de roulement ayant un sens de roulage préférentiel tel que, lorsqu'on fait tourner le pneumatique dans ce sens préférentiel, celui-ci offre des propriétés d'adhérences au sol meilleures que celles offerte lorsqu'on fait tourner le pneumatique dans l'autre sens.

Dans la **figure 1****,** le bloc allongé 3 est séparé d'un autre bloc 4 de l'ensemble de bloc 17 par la rainure 19. Comme il a déjà été précisé, la rainure 19 délimite la paroi latérale 5 inclinée du bloc allongé 3 dans laquelle l'incision 11 et le canal 9 débouchent.

La **figure 4** représente une vue agrandie du bloc allongé 3 de la bande de roulement. Ce bloc 3 comprend une face de contact 7 sur laquelle l'incision 11 débouche. Le bloc 3 comprend également une texture 21 venue de matière avec la face de contact 7 et faisant contraste avec le reste de la face de contact 7. Cette texture entoure la sortie de l'incision 11 sur la face de contact 7 dans une zone centrée sur l'incision et présentant une largeur d'au moins le double de la largeur de l'incision. Par « texture », on entend un agencement organisé d'une pluralité d'éléments, tout ou partie des éléments de l'agencement étant la répétition d'un même élément de base, par exemple, un brin ou une lamelle.

Par « brin », on entend un élément filiforme dont la hauteur est au moins égale à 2 fois le diamètre d'un disque de même surface que la section moyenne du brin. La texture par brins 23 est illustrée à la **figure 5****.**

Par « lamelles », on entend des brins allongés qui présentent une longueur au moins égale à deux fois leur hauteur. La texture par lamelles 25 est illustrée à la **figure 6****.**

L'effet de ces brins ou lamelles est de « piéger » une grande quantité des rayons lumineux incidents qui rencontrent la texture 21, de sorte que cette texture 21 apparait plus noir que le reste de la face de contact 7.

Dans la **figure 5****,** les brins 23 sont répartis dans la texture 21 selon une densité au moins égale à un brin par millimètre carré (mm²), chaque brin ayant une section moyenne S comprise entre 0,003 mm² et 1 mm². On notera que la section moyenne de chaque brin correspond à la moyenne des sections S mesurées à intervalles réguliers depuis la base du brin. Les brins 6 ont une forme globalement conique avec une section diminuant dans la hauteur Hb de ces brins.

Dans la **figure 6****,** les lamelles 25 sont sensiblement parallèles entre elles. Le pas P des lamelles dans la texture est compris entre 0,1 mm et 0,5 mm. Chaque lamelle a une largeur moyenne comprise entre 0,03 mm et 0,25 mm. La largeur moyenne correspond ici à la moyenne des largeurs 1 mesurées à intervalles réguliers dans la hauteur Hl de la lamelle, la hauteur de chaque lamelle étant comprise entre 0,05 mm et 0,5 mm. Dans un mode de réalisation préférentiel, les lamelles 25 de la texture 21 s'étendent parallèlement à la trace formée par l'incision 11 sur la face de contact du bloc allongé.

L'invention n'est pas limitée aux exemples décrits et représentés et diverses modifications peuvent y être apportées sans sortir de son cadre.

Ainsi, les traces formées par l'incision 11 sur la face de contact 7 du bloc ou sur la paroi latérale inclinée 5 peuvent ne pas être rectilignes. Ces traces peuvent être, par exemple, curvilignes, en zig-zag ou autres.

En outre, il est possible que l'incision 11 et le canal 9 ne soient pas alignés, mais forment un angle non nul entre leur direction d'extension respective.

## Revendications

1. Pneumatique comportant une bande de roulement (1), ladite bande de roulement comprenant au moins un bloc allongé (3), le bloc allongé étant délimité par au moins une paroi latérale (5) et une face de contact (7), ladite paroi latérale (5) faisant un angle non nul avec une direction transversale (Y), ladite face de contact (7) étant destinée à venir en contact avec une chaussée, le pneumatique comprenant au moins un canal (9) s'étendant dans le bloc allongé et débouchant sur la paroi latérale (5) de ce bloc allongé, le pneumatique comprenant une incision (11) s'étendant à partir du canal (9) vers la face de contact (7), ladite incision (11) débouchant sur la paroi latérale (5) du bloc allongé (3) au niveau d'une zone de sortie de paroi latérale (5) **caractérisé en ce que** la paroi latérale (5) du bloc allongé (3) est inclinée par rapport à une direction radiale (Z), au moins dans la zone de sortie de paroi latérale de l'incision (11), d'un angle θ compris entre 20 degrés et 60 degrés par rapport à cette direction radiale (Z) et **en ce que** le bloc allongé (3) fait partie d'un ensemble de blocs (17), ledit ensemble de bloc (17) s'étendant du bord (15) de la bande de roulement vers le centre (13) globalement selon une courbure C, ledit ensemble de blocs (17) étant répété sur toute la circonférence du pneumatique de sorte que la bande de roulement soit directionnelle, et **en ce que** le bloc allongé (3) est séparé d'un autre bloc de l'ensemble de blocs (17) par une rainure (19), ladite rainure (19) délimitant la paroi latérale (5) inclinée du bloc allongé (3) dans laquelle l'incision (11) et le canal (9) débouchent.

2. Pneumatique selon la revendication 1, **caractérisé en ce que,** l'incision (11) débouchant sur la face de contact (7) au niveau d'une zone de sortie de face de contact de l'incision, ladite zone de sortie de face de contact de l'incision comprend une texture (21) faisant contraste avec le reste de la face de contact (7), ladite texture (21) étant venue de matière avec le bloc allongé (3).

3. Pneumatique selon la revendication 2, **caractérisé en ce que** la texture comprend une pluralité de brins (23) répartis dans la texture selon une densité au moins égale à un brin par millimètre carré (mm²), chaque brin ayant une section moyenne comprise entre 0,003 mm² et 1 mm².

4. Pneumatique selon la revendication 2, **caractérisé en ce que** la texture (21) comprend une pluralité de lamelles (25) ayant un pas inférieure à 0,3 mm et une largeur moyenne comprise entre 0,03 mm et 0,25 mm.

5. Pneumatique selon la revendication 4, **caractérisé en ce que** l'incision formant une trace sur la face de contact du bloc allongé, les lamelles (25) de la texture (23) s'étendent globalement parallèlement à cette trace.

## Patentansprüche

1. Reifen, der einen Laufstreifen (1) aufweist, der Laufstreifen umfassend mindestens einen länglichen Block (3), wobei der längliche Block von mindestens einer Seitenwand (5) und einer Kontaktfläche (7) begrenzt wird, wobei die Seitenwand (5) einen Winkel ungleich Null mit einer Querrichtung (Y) bildet,wobei die Kontaktfläche (7) dazu bestimmt ist, mit einer Straße in Kontakt zu treten, der Reifen umfassend mindestens einen Kanal (9), der sich in dem länglichen Block erstreckt und in der Seitenwand (5) dieses länglichen Blocks mündet, der Reifen umfassend einen Einschnitt (11), der sich von dem Kanal (9) in Richtung der Kontaktfläche (7) erstreckt, wobei der Einschnitt (11) in die Seitenwand (5) des länglichen Blocks (3) an einem Austrittsbereich der Seitenwand (5) mündet, **dadurch gekennzeichnet, dass** die Seitenwand (5) des länglichen Blocks (3) bezogen auf eine radiale Richtung (Z) zumindest in dem Austrittsbereich der Seitenwand des Einschnitts (11) um einen Winkel θ zwischen 20 Grad und 60 Grad bezogen auf diese radiale Richtung (Z) geneigt ist, und dadurch, dass der längliche Block (3) zu einer Anordnung von Blöcken (17) gehört, wobei sich die Blockanordnung (17) vom Rand (15) des Laufstreifens im Allgemeinen entsprechend einer Krümmung C in Richtung der Mitte (13) erstreckt, wobei die Anordnung von Blöcken (17) über den gesamten Umfang des Reifens wiederholt wird, so dass der Laufstreifen gerichtet ist, und dadurch, dass der längliche Block (3) durch eine Rille (19) von einem anderen Block der Anordnung von Blöcken (17) getrennt ist, wobei die Rille (19) die geneigte Seitenwand (5) des länglichen Blocks (3) begrenzt, in die der Einschnitt (11) und der Kanal (9) münden.

2. Reifen nach Anspruch 1, **dadurch gekennzeichnet, dass**, der Einschnitt (11) in die Kontaktfläche (7) an einem Austrittsbereich einer Kontaktfläche des Einschnitts mündend, der Austrittsbereich einer Kontaktfläche des Einschnitts eine Textur (21) umfasst, die einen Kontrast zum Rest der Kontaktfläche (7) bildet, wobei die Textur (21) mit dem länglichen Block (3) einstückig ausgebildet ist.

3. Reifen nach Anspruch 2, **dadurch gekennzeichnet, dass** die Textur
eine Mehrzahl von Fasern (23) umfasst, die in der Textur entsprechend einer Dichte verteilt sind, die mindestens einer Faser pro Quadratmillimeter (mm²) entspricht, wobei jede Faser einen mittleren Querschnitt zwischen 0,003 mm² und 1 mm² aufweist.

4. Reifen nach Anspruch 2, **dadurch gekennzeichnet, dass** die Textur (21) eine Mehrzahl von Lamellen (25) umfasst, die einen Abstand unter 0,3 mm und eine durchschnittliche Breite zwischen 0,03 mm und 0,25 mm aufweisen.

5. Reifen nach Anspruch 4, **dadurch gekennzeichnet, dass**, der Einschnitt eine Spur auf der Kontaktfläche des länglichen Blocks bildend, sich die Lamellen (25) der Textur (23) im Allgemeinen parallel zu dieser Spur erstrecken.

## Claims

1. Tyre comprising a tread (1), said tread comprising at least one elongate block (3), the elongate block being delimited by at least one lateral wall (5) and a contact face (7), said lateral wall (5) making a non-zero angle with a transverse direction (Y), said contact face (7) being intended to come into contact with a road surface, the tyre comprising at least one channel (9) that extends through the elongate block and leads onto the lateral wall (5) of this elongate block, the tyre comprising a sipe (11) extending from the channel (9) towards the contact face (7), said sipe (11) leading onto the lateral wall (5) of the elongate block (3) in a lateral wall (5) outlet region, **characterized in that** the lateral wall (5) of the elongate block (3) is inclined with respect to a radial direction (Z), at least in the lateral wall outlet region of the sipe (11), at an angle θ of between 20 degrees and 60 degrees with respect to this radial direction (Z) **characterized in that** the elongate block (3) is part of a set of blocks (17), said set of blocks (17) extending from the edge (15) of the tread towards the centre (13), generally along a curvature C, said set of blocks (17) being repeated around the entire circumference of the tyre such that the tyre is directional, at least in part, and **in that** the elongate block (3) is separated from another block of the set of blocks (17) by a groove (19), said groove (19) delimiting the inclined lateral wall (5) of the elongate block (3) into which the sipe (11) and the channel (9) lead.

2. Tyre according to either of Claims 1, **characterized in that,** with the sipe (11) leading onto the contact face (7) in a contact face outlet region of the sipe, said contact face outlet region of the sipe comprises a texture (21) that contrasts with the rest of the contact face (7), said texture (21) being produced integrally with the elongate block (3).

3. Tyre according to Claim 2, **characterized in that** the texture comprises a plurality of strands (23) distributed through the texture at a density at least equal to one strand per square millimetre (mm²), each strand having a mean cross section of between 0.003 mm² and 1 mm².

4. Tyre according to Claim 2, **characterized in that** the texture (21) comprises a plurality of lamellae (25) having a spacing of less than 0.3 mm and a mean width of between 0.03 mm and 0.25 mm.

5. Tyre according to Claim 4, **characterized in that**, with the sipe forming a line on the contact face of the elongate block, the lamellae (25) of the texture (23) extend generally parallel to this line.
